Europäisches Patentamt

European Patent Office

Office européen des brevets

(19)

(11) Veröffentlichungsnummer: **0 339 338**

**A1**

(12) # EUROPÄISCHE PATENTANMELDUNG

(21) Anmeldenummer: 89106182.2

(22) Anmeldetag: 07.04.89

(51) Int. Cl.⁴: **C23C 2/00 , C04B 35/52**

(30) Priorität: 22.04.88 DE 3813713

(43) Veröffentlichungstag der Anmeldung:
02.11.89 Patentblatt 89/44

(84) Benannte Vertragsstaaten:
**AT BE CH DE ES FR GB GR IT LI LU NL SE**

(71) Anmelder: **INTERATOM Gesellschaft mit beschränkter Haftung**
**Friedrich-Ebert-Strasse**
**D-5060 Bergisch-Gladbach 1(DE)**

(72) Erfinder: **Jung, Jürgen, Dr.**
**Barbarastrasse 3**
**D-5060 Bergisch Gladbach 1(DE)**
Erfinder: **Turwitt, Martin, Dr.**
**Grossenbaumer Allee 291**
**D-4100 Duisburg 28(DE)**
Erfinder: **Mittenbühler, Arnulf, Dr.**
**Welcherheide 34**
**D-5060 Bergisch Gladbach 1(DE)**

(74) Vertreter: **Mehl, Ernst, Dipl.-Ing. et al**
**Postfach 22 13 17**
**D-8000 München 22(DE)**

(54) **Verwendung von kohlenstoffaserverstärktem Kohlenstoff für Fördervorrichtungen in Schmelzen.**

(57) Verwendung von kohlenstoffaserverstärktem Kohlenstoff für Fördervorrichtungen in Schmelzen

Um die Standzeit von Fördervorrichtungen (5, 6) zu erhöhen, die dazu bestimmt sind, mit Schmelzen (2) in Berührung zu kommen, insbesondere mit Aluminiumschmelzen, wird vorgeschlagen, die hierdurch (insbesondere bei zusätzlicher Reibung) belasteten Teile aus kohlenstoffaserverstärktem Kohlenstoff CFC herzustellen, zumindest jedoch sie mit einem Überzug (7) aus diesem Werkstoff zu versehen. Der erhöhte Materialpreis wird durch die erzielbaren Verbesserungen der Produktivität mehr als ausgeglichen.

### Verwendung von kohlenstoffaserverstärktem Kohlenstoff für Fördervorrichtungen in Schmelzen

Die vorliegende Erfindung bezieht sich auf eine Verwendung von kohlenstoffaserverstärktem Kohlenstoff für einen bestimmten Verwendungszweck entsprechend dem Oberbegriff des 1. Anspruchs. Zur Oberflächenbehandlung (z. B. Beschichtung) insbesondere von in Bandform vorliegendem Material (z. B. Stahlblech) ist es bekannt, das Material durch ein oder mehrer Bäder der geeigneten Zusammensetzung zu führen. Um eine kontinuierliche Prozeßführung zu ermöglichen, sind hierzu Fördervorrichtungen erforderlich, von denen zumindest Teile (z. B. Umlenkrollen) mit in das Bad eintauchen müssen oder sonst mit der Flüssigkeit des Bades in Berührung kommen, z. B. mit derjenigen, die dem Fördergut nach dem Verlassen des Bades noch anhaftet. Die in den Bädern verwendeten Flüssigkeiten wirken oft mechanisch und/oder chemisch korrosiv auf dem Werkstoff ein, aus dem die Fördervorrichtungen bzw. deren belastete Teile hergestellt sind. Dies führt zu vorzeitigem Verschleiß der betreffenden Teile, was über die eigentlichen Reparaturkosten hinweg erhebliche Produktivitätseinbußen mit sich bringt. Ein bekanntes Beispiel hierfür sind Anlagen, in denen Bandstahl durch Eintauchen in flüssiges Aluminium mit einem korrosionshemmenden Überzug versehen wird. Die bekannt hohe Aggressivität von flüssigem Aluminium führt dazu, daß die damit in Berührung kommenden Teile, z. B. Führungswalzen und deren Drehlager, innerhalb weniger Tage zerstört werden, selbst wenn sie aus verhältnismäßig widerstandsfähigem Grauguß hergestellt werden.

Aufgabe der vorliegenden Erfindung ist eine Verbesserung der Vorrichtungen der beschriebenen Art durch Einsatz eines an sich bekannten, für den vorliegenden Zweck jedoch noch nicht verwendeten Werkstoffes, der neben einem hohen chemischen Widerstandsvermögen auch andere vorteilhafte mechanische Eigenschaften aufweist.

Die Lösung dieser Aufgabe erfolgt gemäß dem kennzeichnenden Teil des 1. Anspruchs durch den Einsatz von kohlenstoffaserverstärktem Kohlenstoff (CFC). In sauerstofffreien Medien ist dieser Werkstoff praktisch korrosionsfrei und weist darüber hinaus eine hervorragende mechanische Festigkeit auf, die trotz seines verhältnismäßig hohen Preises bereits zu einer Verwendung auf anderen Gebieten der Technik geführt hat.

Der 2. Anspruch gibt als besonderen Verwendungszweck den Einsatz in Metallschmelzen an. Hierfür ist von Wichtigkeit, daß CFC auch eine hohe Temperaturfestigkeit aufweist.

Gemäß dem 3. Anspruch empfiehlt sich die erfindungsgemäße Verwendung insbesondere für diejenigen Fälle, in denen in Aluminiumschmelzen gearbeitet wird. Bei der oben angeführten geringen Standzeit herkömmlicher Werkstoffe wiegt die jetzt mögliche Verlängerung der Reparaturintervalle die erhöhten Werkstoffkosten bei weitem auf.

Der freie Kohlenstoff verleiht diesem Werkstoff einen niedrigen Reibungskoeffizienten, so daß seine Verwendung sich gemäß Anspruch 4 insbesondere für solche Teile empfiehlt, die in gleitendem, d. h. reibungsbehaftetem Eingriff mit anderen Teilen stehen.

Gemäß der im 5. Anspruch angegebenen Ausgestaltung ist dieser Gesichtspunkt von besonderer Bedeutung, wenn der Werkstoff für Buchsen und/oder Zapfen von Gleitlagern verwendet wird.

Die Werkstoffkosten lassen sich gemäß dem im 6. Anspruch gemachten Vorschlag dadurch verringern, daß nicht die belasteten Teile der Fördervorrichtungen insgesamt aus CFC hergestellt werden, sondern daß diese Teile nur mit einem Überzug aus demselben versehen werden.

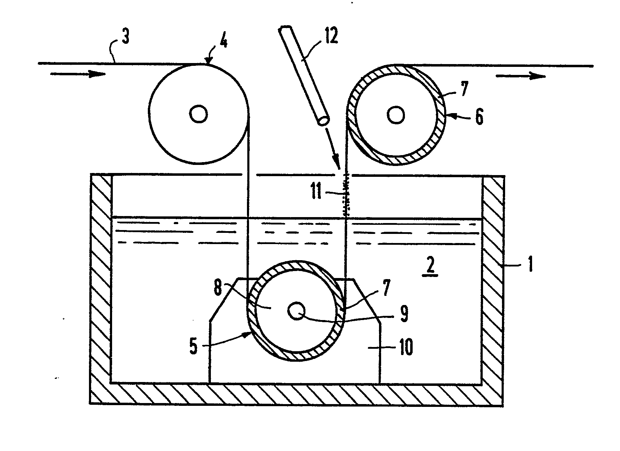

Ein Verwendungsbeispiel der Erfindung ist schematisch in der Zeichnung dargestellt, und zwar im Schnitt.

In einem Behälter 1 befindet sich eine der Oberflächenbehandlung dienende Flüssigkeit 2, z. B. eine Aluminiumschmelze. Stahlband 3 durchläuft, durch drei Führungswalzen 4 bis 6 umgelenkt, das Bad 2, um im Beispiel mit einem Aluminiumüberzug versehen zu werden. Die in die Schmelze 2 eintauchende zweite Führungsrolle 5 wird durch eine Schicht 7 aus kohlenstoffaserverstärktem Kohlenstoff vor dem Angriff der Schmelze geschützt; zur Ersparnis dieses kostspieligen Materials kann ein Grundkörper 8 aus einem anderen Werkstoff, z. B. Grauguß hergestellt sein. Besonderer Belastung durch die Drehbewegung und die dabei auftretende Reibung sind Lagerzapfen 9 ausgesetzt, ebenso wie ihre hier nicht sichtbaren, in einem Bock 10 angeordneten Buchsen. Diese Teile sind daher ebenfalls aus CFC hergestellt. Es kann sich auch empfehlen, die dritte Führungswalze 6 in ähnlicher Weise mit einer Schutzschicht 7 aus CFC zu versehen, obwohl sie nicht in die Schmelze 2 eintaucht. An dem aus dieser auftauchenden Band 3 haftet noch Flüssigkeit 11 (nicht notwendigerweise in der hier zur Verdeutlichung gewählten Tropfenform), die auch z. B. durch Einsatz von Abblaseinrichtungen 12 (dünne Pfeile) nicht ausreichend entfernt wird.

**Ansprüche**

1. Verwendung von kohlenstoffaserverstärktem Kohlenstoff für die Herstellung von Fördervorrichtungen oder Teilen davon (4 bis 10), die dazu bestimmt sind, mit Schmelzen (2) in Berührung zu kommen.

2. Verwendung nach Anspruch 1, **dadurch gekennzeichnet**, daß die Schmelze (2) eine Metallschmelze ist.

3. Verwendung nach Anspruch 2, **dadurch gekennzeichnet**, daß die Metallschmelze (2) vorwiegend Aluminium enthält.

4. Verwendung nach Anspruch 1 für Teile (9), die in gleitendem Eingriff mit anderen Teilen (10) stehen.

5. Verwendung nach Anspruch 4 für Achsgleitlager (9, 10).

6. Verwendung nach einem oder mehreren der vorhergehenden Ansprüche für die Herstellung von Fördervorrichtungen oder Teilen davon in der Form von auf Grundkörper (8) aus einem anderen Werkstoff aufgebrachten Überzügen (7).

7. Fördervorrichtung, **dadurch gekennzeichnet**, daß mindestens eins ihrer Teile (4 bis 10) mit kohlenstoffaserverstärktem Kohlenstoff versehen ist.

88 P 6714

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-U-8 322 639 (URANIT) <br> * Ansprüche 1-8 * <br> --- | 1,6 | C 23 C 2/00 <br> C 04 B 35/52 |
| A | FR-A-2 171 414 (SIGRI ELEKTROGRAPHIT) <br> * Ansprüche 1,2; Seite 5, Zeilen 10-17 * <br> --- | 1,2 | |
| A | DE-A-3 035 117 (DAINIPPON SCREEN MANUFACTURING) <br> * Ansprüche 1-5; Seite 3 * <br> --- | 1 | |
| A | DE-C- 704 434 (HOESCH) <br> * Anspruch; Seite 2, Zeilen 25-30 * <br> --- | 2,3 | |
| A | DE-A-3 113 004 (SCHUNK & EBE) <br> * Ansprüche 1-3 * <br> --- | 4,5 | |
| A | US-A-3 975 556 (M.B. PIERSON) <br> --- | | |
| A | PATENT ABSTRACTS OF JAPAN, Band 3, Nr. 138 (C-64), 16. November 1979; & JP-A-54 117 333 (SHIN NIPPON SEITETSU K.K.) 12-09-1979 <br> ----- | | RECHERCHIERTE SACHGEBIETE (Int. Cl.4) <br><br> C 23 C <br> C 04 B |

Der vorliegende Recherchenbericht wurde für alle Patentansprüche erstellt

| Recherchenort | Abschlußdatum der Recherche | Prüfer |
|---|---|---|
| DEN HAAG | 27-06-1989 | ELSEN D.B.A. |